# EUROPEAN PATENT SPECIFICATION

(11) **EP 3 264 568 B1**
(45) Date of publication and mention of the grant of the patent: **31.07.2019**
(21) Application number: 15883047.1
(22) Date of filing: 24.02.2015
(51) Int. Cl.: H02J 9/08, H02J 7/16, H02P 9/00

(54) **COGENERATING DYNAMIC UPS**
DYNAMISCHE USV MIT KRAFT-WÄRME-KOPPLUNG
UPS DYNAMIQUE COGÉNÉRATRICE

(43) Date of publication of application: 03.01.2018
(73) Proprietor: E - Dina Energy S.A.S., 1111 Bogotá (CO)
(72) Inventor: MURACA, Antonio, 1111 Mar del Plata (CO)
(74) Representative: Herrero & Asociados, S.L.
(86) International application number: PCT/CO2015/000003
(87) International publication number: WO 2016/134679

(56) References cited:
- US-A1- 2012 068 541
- US-B2- 7 230 344
- US-B2- 7 566 990
- US-B2- 7 635 967
- US-B2- 7 723 863

## Description

### THE TECHNOLOGICAL AREA

This patent application for a cogenerating dynamic UPS (*uninterruptible power* s*upply*) combines electronic systems, electrical systems, computerized and mechanical systems to optimize energy offering. It works with all laws known in the electric field, and all current knowledge available in the electronic field, which belongs to the field of complementary or substitute energy sources.

### STATE-OF-THE-ART TECHNOLOGY

Currently for power supply energy after a network outage, there are the socalled UPS. These stationary energy supply units deliver the energy previously accumulated in a battery pack. Then, they convert it from an electronic plate, and replace the energy electric from the grid, and do it with a loss margin that ranges between 10% and 25%, and the alternate current delivered is not always acceptable.

Patent document number US7230344 relates to an energy supply apparatus, which includes a rotor arranged in a stator and which is mechanically coupled to the kinetic energy storage device. The stator includes coils that receive energy from a power source that is capable of providing alternating current (AC) to the coils at varying frequencies to generate energy by converting the kinetic energy of the flywheel into electrical energy. It also discloses the addition of a flywheel that, taking advantage of the kinetic energy produced by a generator, when it works normally generates energy that is directed to the electrical system, but when there is an interruption of the external energy supply, it takes advantage of the inertia of its rotation to generate transiently the required energy, while a UPS or other generation system comes into operation.

The main difference between said document and the cogenerating dynamic UPS disclosed herein is that the Cogeneration Dynamic UPS is a feedback device that in this process orders force vectors from the magnetic fields, giving continuity to the rotation of the rotor and that, when disconnected from the source, becomes an autonomous magnetoelectric generator.

Document US7556990 discloses the design of a bidirectional, programmable circuit (BUS) that allows a UPS to deliver the required energy stored to operate the primary generator when the power source fails, causing it to become a generator of induction and thus maintains the energy supply without losses until the primary source recovers or another source that supplies the energy enters into operation.

The cogenerating dynamic UPS disclosed herein differs from said document in that not only refers to a circuit, but describes a device that is made up of a generator engine, which in turn stores energy and when not there is an external source, the device delivers its production in an intelligent way, distributing it according to the needs, be it a part for feedback, another part for storage and another third part for direct use as reactive or inductive energy.

In addition, the equipment when feeding a starter motor with electric current, rotates a rotor of a magnetic disk, when neodymium magnets pass over coils of a stator produce the pulse The electric current passes through capacitors and is directed to bridge rectifiers that convert the alternating current into direct current, which is stored in a battery bank and passes to an interface module to feed a starter motor.

Finally, the patent document number US20120068541 discloses an uninterruptible power supply (UPS) system that includes a power transfer circuit having a power output configured to be coupled to a load, a UPS circuit having the first power input configured to be coupled to a generator; a second power input configured to be coupled to a backup power source and an energy output configured to be coupled in common to the load with the energy output of the power transfer circuit; and a control circuit operatively associated with the UPS circuit and configured to control the power supply to the generator load and the backup power source through the UPS circuit that responds to the state of the power transfer circuit.

The cogenerating dynamic UPS disclosed herein refers to a cogenerative Dynamic UPS that has its own inertia and what it generates can be stored in a battery bank or in capacitors to be used according to the needs of the user, making theses disclosures totally different.

### ADVANTAGES OF THE INVENTION

The cogenerating dynamic UPS for patent application has the following advantages, among others:
a) It is a more efficient device with around 3% of conversion loss, and it incorporates a φ (Fi) automatic cosine corrector, to improve the electrical potential.
b) The cogenerating dynamic UPS, unlike the conventional UPS, has dynamic components that make this unit have greater efficiency maximizing its function as supplier of energy as required, with minor losses during the process of energy storage and supply. A Programmable Logic Controller - PLC and software manager make its performance far superior to the conventional UPS.
c) It can be placed in many places where the energy grid is absent or where it usually has intermittency, such as mobile or field hospitals, post-natural disaster emergency portable equipment, mining equipment, and any place where a better use of energy and its routing should be made effectively and continuously.
d) It cogenerates alternative and renewable energy efficiently and constantly.
e) Time duration of power supply is superior to the time of conventional units in the market.

**DESCRIPTION OF THE ATTACHED FIGURES**

| | |
|---|---|
| Figure 1. | Perspective view of a cogenerating dynamic UPS, consisting of a rack **(1),** a rod structure **(2), a** containment ring **(3),** a programmable logic controller PLC unit **(8),** an inverter **(13)** and an interface module **(14)** |
| Figure 2. | Design view of the stator **(7)** with embedded coils **(5),** a coil core **(6),** with capacitors and super-capacitors **(17).** |
| Figure 3. | Top view of the rotor **(9)** with neodymium magnets **(11)** and two concentric tracks **(10).** |
| Figure 4. | Upper perspective view of the rack **(1)** and **(2)** with a starter motor **(4),** and a containment ring **(3).** |
| Figure 5. | Assembly view of the connector flange **(12)** with the starter motor **(4).** |
| Figure 6. | Cut-away view of the arrangement of neodymium magnets **(11).** |
| Figure 7. | Electronic circuit of the inverter **(13).** |
| Figure 8. | Block diagram of the operation of the cogenerating dynamic UPS for electric energy supply. |
| Figure 9. | View of electric pulses catcher coils **(15)** |
| Figure 10. | View of the central axis rod **(16)** between the starter motor **(4)** and the connector flange **(12).** |

### DESCRIPTION OF THE INVENTION:

The cogenerating dynamic UPS for patent application consists of:
a) A rack **(1)** where the full equipment is mounted, with a rod structure in iron and aluminum rods **(2)** and a containment ring **(3)** in aluminum of 60 cm diameter, 1cm wall thickness and 14 cm height, that serve as a security container for physical blockage and electromagnetic blockage where the bearings, the axis rod, and the starter motor are mounted **(4)** from 0 to 110V; this motor takes the magnetic disk rotor to spin regimen, both universal-type currents.
b) A stator **(7)** with eighteen ignition coils **(5)** of enameled copper, which work as electric pulses collectors, 1 kg weight each one, 10 cm diameter, 2 cm core, 3 cm height. Coil cores **(6)** are composed of resin, styrene, cobalt, ferrite and graphite.
c) A rotor **(9)** with magnetic disk rotors of 57.5 centimeter diameter, 22 mm thickness, non-magnetic material, with two concentric tracks **(10)** where neodymium magnets **(11)** are located, and a mass-carrying center for an aluminum flange of 99.9% purity **(12).**

The function of this rotor is affecting coils with magnetic force lines, which revolves in the system stipulated by the PLC. The molecular magnetic domain of the core in the coils is calculated according to the frequency. In this case it was designed for low and middle frequencies granted by the rpm of the magnetic disk rotor.
d) A Programmable Logic Controller - PLC **(8)** that has the following integrated components: Panel control and backlight display, power supply, interface for expansion modules, interface for programming module (Card), and PC cable, timer, digital and analogical controls, reader and controller of incoming and outgoing signals. This equipment is necessary to control core speed and saturation; it also controls the management of the inverter current, stabilizes the rotation, and controls the starter motor with the appropriate software. This module can be accessed externally providing bilateral communication in real time, by virtual media (internet, mobile phones, etc.).
e) Full-wave bridge rectifier AC-DCs, which are twenty-three, 2A 1000V, convert all electrical power from the ignition coils into direct current **(5).**
f) Two flanges **(12)** that are a 15 centimeter diameter disk of aluminum, with a central hole of 10 mm, and 15 millimeter thickness, with a 6 cm diameter core, and 5 centimeter thickness in tapering; these support the magnetic disk rotor to the axis rod **(16),** coupled by 8 fastening screws, coupled with each other;
g) Eight capacitors **(17),** with a capacity of 15uF +-5%, and two supercapacitors of 150uF per + - 5%, 200V, adjustments to the capacity applied to coils **(5)** by the PLC unit, according to the software.
h) Twelve neodymium magnets **(11),** which can vary according to the amount and form of power required, since they are in direct relation to the desired frequency and the magnetic force lines needed for power generation.
i) Three-phase electronic inverter **(13)** that receives 0V to 30V direct current, and turns it into three-phase current at 3x110V or 3x220V. This unit has heat, peak limiters, and works at 50 or 60 Hz according to the requirements. It has clipper circuits for frequency, voltage and temperature. The equipment works in response to what is indicated by the PLC unit, according to programmed software.
j) An interface module **(14)** that consists of a set of "mosfets" (*metal-oxide-semiconductor field-effect transistors*)*,* power controlled weak current coupling semiconductors. They are the readings from all sensors of the equipment handled by this interface, which are subsequently converted into power signals.
k) Two electric pulses catcher coils **(15)** with air core detecting the positioning of the disc. One of them of 2100 turns of wire with 0.12 diameter of enameled copper detects the movement of the disk; the second electric pulses catcher coil **(15)** of 6700 turns of wire, with 0.18 diameter of enameled copper detects the speed of the disk.
I) Batteries of 12 volts, 7.5 Amps to store the energy. The amount of batteries needed can be placed, with the features required according to the task to be done.

In alternate current (AC) circuits, receivers have an opposition to the current that does not only depend on the ohmic resistance of the same point since the effects of the variable magnetic fields (coils) have an important influence.

The cogenerating dynamic UPS of the invention takes into account the effects of the inductance that is a measure of the opposition to the change in current in an inducer that stores energy in a magnetic field.

Taking this into account, the PLC unit **(8)** inside the cogenerating dynamic UPS defines the power factor **(PF)** of an alternate current circuit as the ratio between active power and apparent power of an electric device; for this reason, **PF** is equals to one (1) in purely resistive loads; the **PF** is equal to zero in inductive and capacitive elements without resistance.

Combining these variables, the cogenerating dynamic UPS through the PLC increases or decreases the capacity in coils with a power supply suitable for each case in an intelligent way, not to mention that this machine fixes the sine angle; this optimizes consumption and makes it different from other existing equipment.

### Operation:

The electric power supplied by batteries is intelligently managed, deriving different outputs for the inductive and reactive current. This task is performed through the magnetic disk or rotor **(9)** that fluctuates direct current carrying it to alternate current of high frequency, which is distributed and conveniently corrected for external consumption, if required, and/or for the inverter **(13).**

At the same time the magnetic force lines of magnets **(11)** enable a set of three-phase coils **(5)** intended for the supply of the starter motor; this whole set managed by the PLC unit **(8)** provides an efficient use of the electric current accumulated in the batteries for this cogenerating dynamic UPS.

Finally, we can say that the electric current accumulated in the batteries is managed effectively, delivering controlled current for each consumption, both for active power and apparent power. By handling the power factor or cosine ϕ (fi) the potential is improved by making the accumulated energy to be delivered and distributed efficiently. For this task, neodymium magnets **(11)** and coils **(5)** are available in a suitable arrangement for these purposes.

With this technology, cogenerating dynamic UPS with different powers can be made, in accordance with specific needs.

The current coming out of the capacitors **(17),** and subsequently rectified, can be driven to the PLC unit **(8)** where, by modifying the logic controller, an impedance is achieved which delays the frequency diagram; this task is performed by the electric pulses catcher coils **(15),** programming in this way the amounts of current that is stored in the battery bank, and which passes to the interface module **(14)** to feedback the starter motor **(4).** After this feedback, a gain of electric current is evident, and it is accumulated in the batteries.

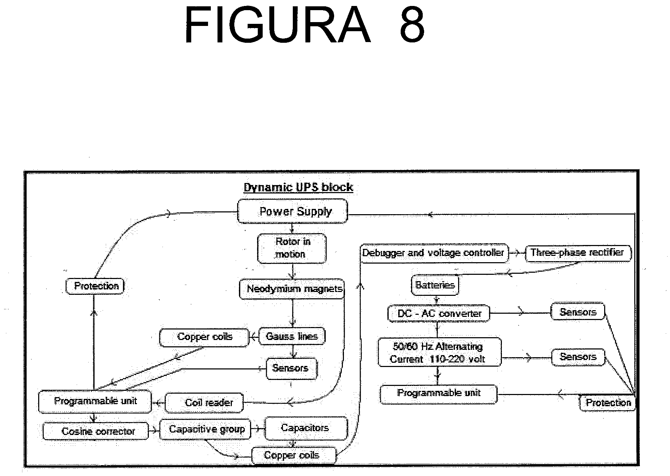

By providing feedback, and arranging the force vectors in the magnetic fields of coils **(5),** continuity of rotor rotation is given **(9)** so the electric grid feedback can be disconnected, making the invention an autonomous and optimized magnetic-electric generator. Figure 8 shows the diagram of power flow blockage.

The power produced by the generator can be driven to the inverter **(13)** to be used directly as alternate current or also led to a battery bank to be stored for its later use. The PLC unit **(8)** is programmed to perform the function determined by the use and destination of the energy produced. This makes the invention to fulfil two functions: the function of high efficiency dynamic UPS, and the function of a magnetic-electric generator.

The PLC unit **(8)** can be programmed to make electric pulses catcher coils **(15)** be able to change the rotation frequency, and in this way increase or decrease the power generation required.

The PLC unit **(8),** which in case of higher power requirement, can be programmed to switch and add current stored in batteries with available current in the inverter **(13),** and in this way to meet an increased demand without being affected. This turns UPS of this invention into cogenerating, which represents a prominent feature regarding the state-of-the-art technology.

The PLC unit **(8)** can be programmed remotely, accessing information in real time, and two-way information about the unit performance.

The PLC unit **(8)** can be programmed so that it can control several units connected in parallel, and thus have linear sum of real power.

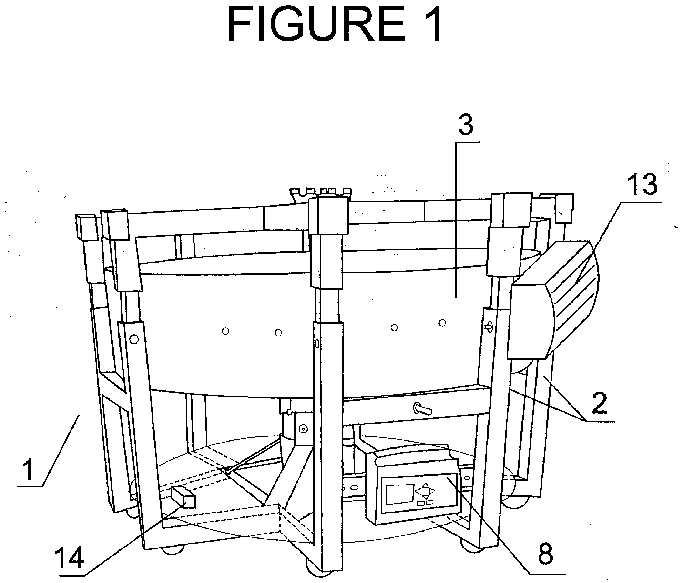

In Figure 1 there is a perspective view of the cogenerating dynamic UPS of the invention, which shows: the chassis **(1),** the metal structure **(2),** the containment ring **(3),** the PLC unit **(8),** the inverter **(13)** and the interface module **(14).**

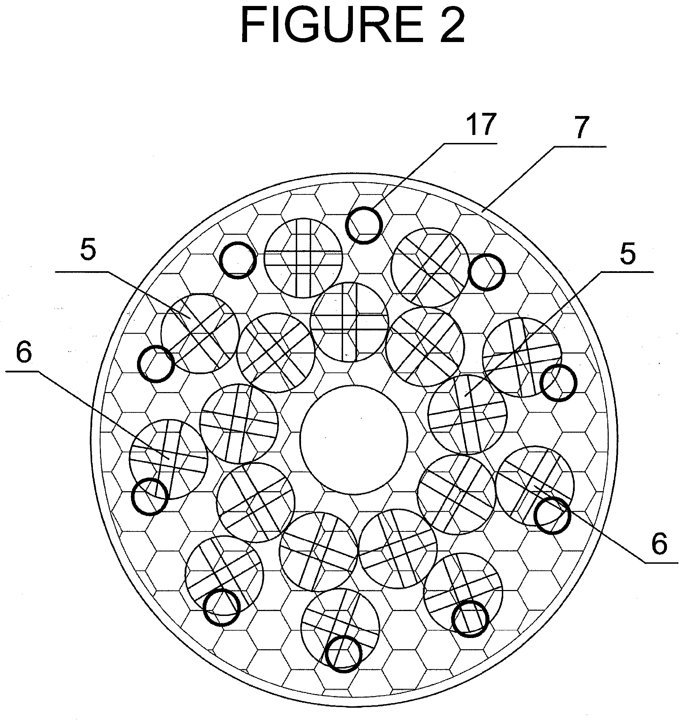

Figure 2 shows a map view of the stator **(7)** with embedded coils **(5),** the coil core **(6),** with capacitors and supercapacitors **(17).**

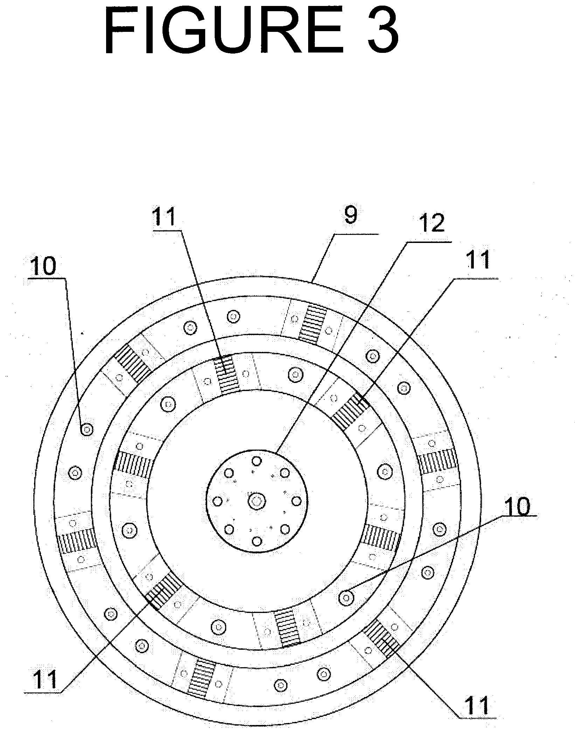

Figure 3 is a top view of the rotor **(9)** with neodymium magnets **(11),** two concentric tracks **(10),** and a connector flange **(12)**

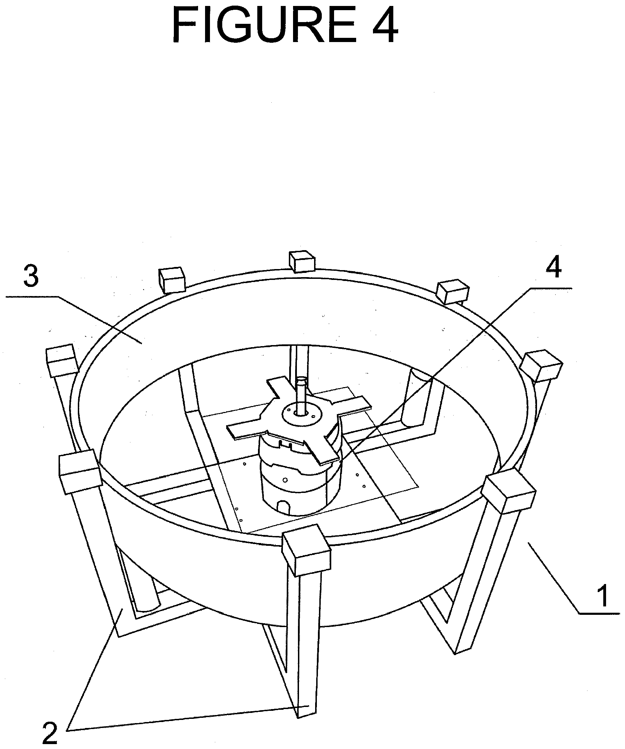

Figure 4 is the perspective top view of the chassis **(1)** with starter engine **(4)** and containment ring **(3).**

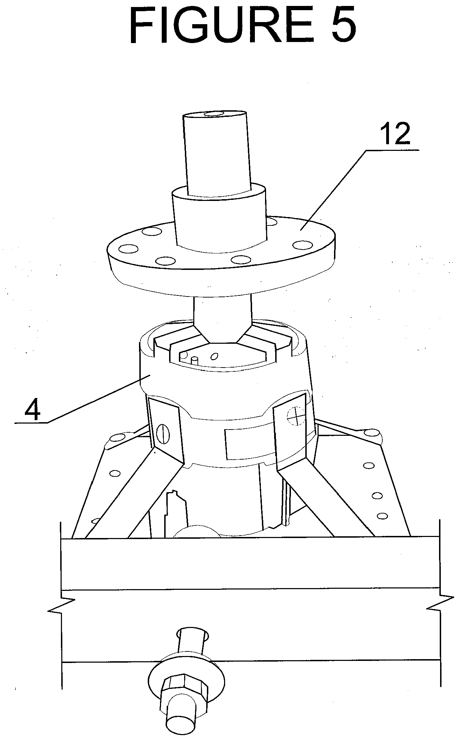

Figure 5 shows the view of the connector flange assembly **(12)** with the starter motor **(4).**

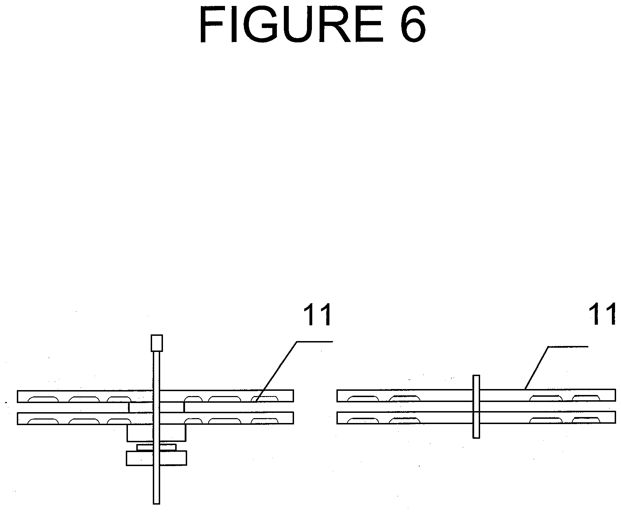

Figure 6 is a cut-away view of the arrangement of the neodymium magnets **(11)** that, depending on the power required, will increase or decrease, as the case may be, the number of disks and magnets.

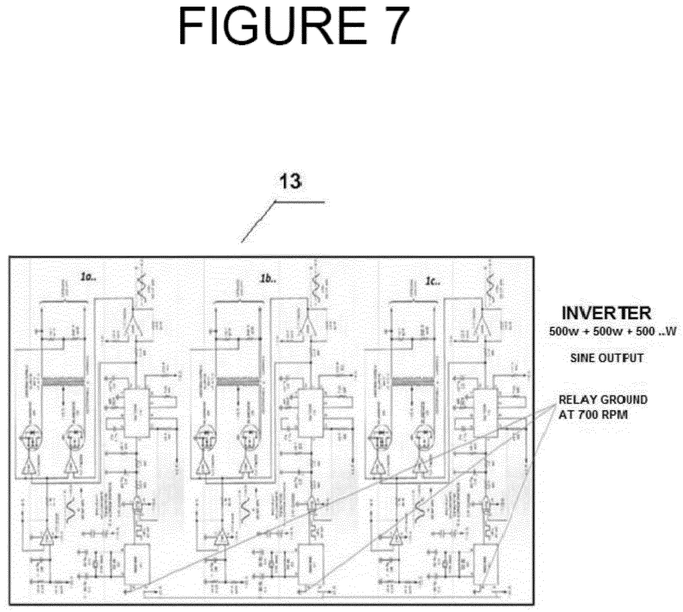

Figure 7 essentially shows the electronic circuit of the inverter **(13),** which is complemented based on specific requirements of the PLC unit.

Figure 8 is a block diagram of the operation of the cogenerating dynamic UPS.

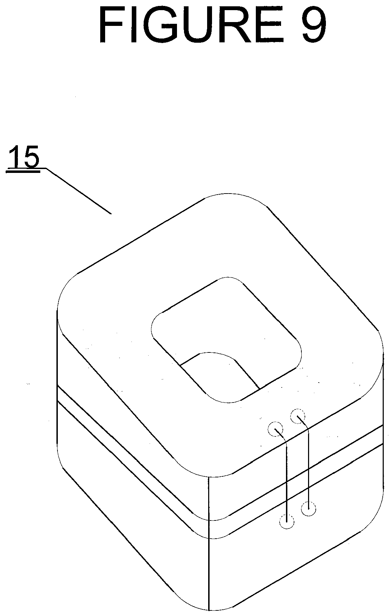

Figure 9 is a perspective view of the electric pulses catcher coil **(15).**

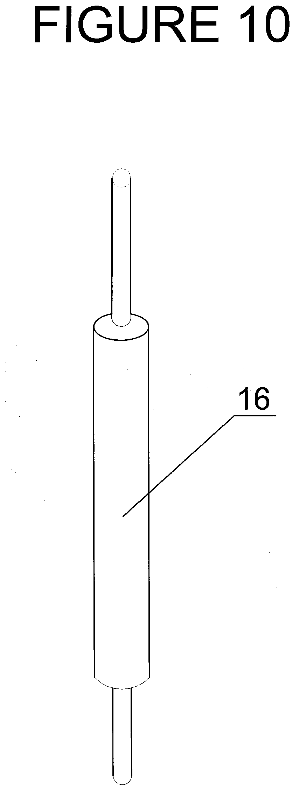

Figure 10 is a view of the axis rod **(16)** that connects the starter motor **(4)** with the connector flange **(12).**

Basic minimum components to set up a cogenerating dynamic UPS are:
- 3 permanent neodymium magnets
- 3 capacitors
- 3 Mosfet transistors
- 1 supercapacitor
- 1 sensor coil
- 1 copying coil
- 3 flow sensors
- 3 electric pulses catcher coils
- 3 variable cores
- 3 Zener diodes
- 1 PLC unit
- 1 starter motor
- 1 power inverter
- 1 battery

By varying the amount of some elements, the cogenerating dynamic UPS can be more powerful and/or with more usage time.

The higher amount of magnets and higher power from its magnetic force lines (Gauss), in addition to the higher amount of elements required, the cogenerating dynamic UPS can provide higher amount of energy.

### Example 1:

The simplest unit requires 3 permanent neodymium magnets, but each of these magnets can have 5,000 lines of force (Gauss), and consequently, a certain amount of energy obtained can be stored. If you have these same 3 magnets but with 10,000 lines of force, you can store and supply a greater quantity of energy according to the size of the components.

### Example 2:

The prototype unit has more magnets than the previous example. Therefore, the elements that compose the cogenerating dynamic UPS go in proportion, while keeping a balance to achieve the final power.

The Stationary UPS that are on the market are sold by specifying the power in Watts and the duration of power delivery depending on the charges applied to them. The cogenerating dynamic UPS do the same work, but the supply is dosed by the PLC unit doing this job more efficiently and effectively.

This cogenerating dynamic UPS unit can be used in innumerable industrial, commercial, household, automotive processes and applications requiring electric power as a substitute for all or part of the charge needed for the operation of these processes in any field. The unit presented here can be used in countless ways and situations. Having the possibility of being operated and remotely controlled by virtual media with the support of PLC software installed on computers, the cogenerating dynamic UPS can supply the energy required in the event of natural disasters when the traditional electric power system is suspended. Its use can also help for the operation of medical devices in places far away from the public electric grid, such as jungles, deserts, isolated locations, among others. Appliances can be connected directly to the cogenerating dynamic UPS. The drones that are currently fulfilling multiple functions could extend their air-time with the help of this machine. The automotive, transport, mining sectors, and all those depending totally or partially on fuels to operate, could decrease the use of these fuels partially or completely avoiding environmental pollution.

The dynamic cogeneration UPS can operate in the same environments as Stationary UPS, but much more efficiently.
- Making a modification to the dynamic cogeneration UPS system, and making a balance of input and output loads, a gain of electric current is evident, allowing it to become cogenerating of the threshold of electric magnetic balance, with an excess in energy, which can be accumulated in batteries that auto-renew in their system of simple electronic load.

This modification which switches the formation of coil connections to the homonymous system generates a higher yield, which is captured by varying the hardware and software installed.

This results in a remnant of electrical energy available for any application and use.
- Modifying the Programmable Logic Controller - PLC, impedance is achieved that delays the frequency diagram.

After this feedback, an autonomous and optimized electric magnetic generator is achieved, which generates a gain when force vectors are arranged in a row in the coil magnetic fields, giving it continuity to the rotation.

Effectively, it is an autonomous electric magnetic generator, with gain in clean, silent, filtered, rectified and stabilized energy that can be used at your own discretion, with capacities that range from small amounts of gain in watts to more complex and powerful energy systems, with more elements, which can supply quantities of autonomous energy; that is, independently of battery banks or input currents.
- All physical components of the invention together with the components of control, capture and storage of data - all interconnected by the interface system of the PLC with built-in software - allow continuous information from the operation of the cogenerating dynamic UPS through virtual platforms and wired or wireless connections remotely and in real time, with two-way feedback to remotely monitor, diagnose, adjust, and schedule its operation at the optimum conditions required.

## Claims

1. Cogenerating dynamic UPS, where in its components:
a) a chassis **(1)** where the full equipment is mounted, with an iron and aluminum structure **(2)** and a containment ring **(3)** where the bearings, the axis rod **(16),** and the starter motor (4) are mounted;
b) A stator **(7)** with enameled copper coils that collect electrical energy **(5);** the coil cores **(6)** made of resin, styrene, cobalt, ferrite and graphite compounds; capacitors and supercapacitors **(17);**
c) Rotor **(9)** of non-magnetic material with two concentric tracks **(10)** where neodymium magnets are located **(11),** and a central disk port for high purity aluminum flanges **(12);**
d) A Programmable Logic Controller PLC **(8)** that has the following integrated components: control, panel control, and backlight display; power supply; interface for expansion modules; interface for programming module (Card), and PC cable; timer; digital and analogical controls; reader and controller of incoming and outgoing signals;
e) Full-wave bridge rectifier AC-DCs;
f) Flanges **(12)** that are aluminum discs with a central hole to support the magnetic disk **(9)** to the axis rod **(16),** coupled with fastening screws;
g) Capacitors **(17)** with 15uF capacity, + - 5%, and two 150uF supercapacitors per + - 5%, 200V;
h) Neodymium magnets **(11);**
i) Electric three-phase inverter **(13)** that receives direct current from 0V to 30V and turns it into three-phase current;
j) Interface module **(14)** that consists of a set of mosfet type transistors, power controlled current coupling semiconductors.
k) Two electric pulses catcher coils **(15)** with air core detecting the positioning of the disc; and
l) Battery bank.

2. Dynamic cogeneration UPS of Claim 1, **CHARACTERIZED BY** feeding the starter motor **(4)** with electric current supplied by an external network, rotating the magnetic disk rotor **(9);** when neodymium magnets **(11)** pass over the stator coils **(5)** produce an electrical pulse that passes through the capacitors **(17),** and is led to the bridge rectifiers that convert alternate current into direct current, which can be completely stored in battery banks.

3. Cogenerating dynamic UPS of Claim 2, **CHARACTERIZED BY** the current coming out of the capacitors **(17),** and subsequently rectified, is driven to the PLC unit **(8)** where, by modifying the logic controller, an impedance is achieved which delays the frequency diagram, programming in this way the amounts of current that is stored in the battery bank, which passes to the interface module **(14)** to feedback the starter motor **(4).**

4. Cogenerating dynamic UPS of Claim 3, **CHARACTERIZED BY** providing the feedback, and arranging the force vectors in the coil magnetic fields **(5),** gives rotation continuity to the rotor **(9),** by disconnecting the feed-in of the mains power, which becomes an autonomous electric magnetic generator.

5. Cogenerating dynamic UPS of Claim 4, **CHARACTERIZED BY** the current which is produced by the generator is led to the inverter **(13)** where it is directly used as alternate current or led to a battery bank to be stored.

6. Cogenerating dynamic UPS of Claim 5, **CHARACTERIZED BY** the PLC unit **(8)** is scheduled so that the electric pulses catcher coils **(15)** change the frequency of rotation and will increase or decrease the generation of power required.

7. Cogenerating dynamic UPS of Claim 6, **CHARACTERIZED BY** the PLC unit **(8)** being programmed for switching and adding the power stored in batteries with the current available in the inverter **(13).**

## Patentansprüche

1. Kraft-Wärme-Kopplung der USV-Komponenten:
a. Fahrgestell **(1),** auf dem die gesamte Ausrüstung montiert ist, mit einer Eisen-Aluminium-Struktur **(2)** und einem Rückhaltering **(3),** auf dem die Lager, die Achsstange **(16)** und der Anlasser **(4)** montiert sind;
b. Stator **(7)** mit emaillierten Kupferspulen, die elektrische Energie **(5)** sammeln; die Spulenkerne **(6)** bestehen aus Harz-, Styrol-, Kobalt-, Ferrit- und Graphitverbindungen; Kondensatoren und Superkondensatoren **(17);**
c. Rotor **(9)** aus nichtmagnetischem Material mit zwei konzentrischen Bahnen **(10),** in denen Neodym-Magnete angeordnet sind **(11),** und einer zentralen Scheibenöffnung für Flansche **(12)** aus hochreinem Aluminium;
d. Eine speicherprogrammierbare Steuerung (SPS) **(8)** mit den folgenden integrierten Komponenten: Steuerung, Bedienfeldsteuerung und Hintergrundbeleuchtung; Netzteil; Schnittstelle für Erweiterungsmodule; Schnittstelle für Programmiermodul (Karte) und PC-Kabel; Timer; digitale und analoge Steuerungen; Leser und Controller für eingehende und ausgehende Signale;
e. Vollwellen-Brückengleichrichter AC-DCs;
f. Flansche **(12),** bei denen es sich um Aluminiumscheiben mit einem zentralen Loch handelt, um die Magnetscheibe **(9)** an der Achsenstange **(16)** zu lagern, die mit Befestigungsschrauben verbunden sind;
g. Kondensatoren **(17)** mit 15 uF Kapazität, + - 5% und 150 uF Superkondensatoren pro + - 5%, 200 V;
h. Neodym-Magnete **(11);**
i. Elektrischer Dreiphasenwechselrichter **(13),** der Gleichstrom von 0V bis 30 V empfängt und in Dreiphasenstrom umwandelt;
j. Schnittstellenmodul **(14),** das aus einem Satz von MOSFET-Transistoren und leistungsgesteuerten Stromkopplungshalbleitern besteht.
k. Zwei elektrische Impulsfängerspulen **(15)** mit Luftkern, die die Positionierung der Scheibe erfassen; und
l. Batteriebank.

2. USV dynamisch cogenerator nach Anspruch 1, **dadurch gekennzeichnet, dass** der Anlasser **(4)** mit elektrischem Strom gespeist wird, der von einem externen Netz geliefert wird, wobei der Magnetplattenrotor **(9)** gedreht wird; Wenn Neodym-Magnete **(11)** über die Statorspulen (5) laufen, wird ein elektrischer Impuls erzeugt, der durch die Kondensatoren **(17)** geht und zu den Brückengleichrichtern geleitet wird, die Wechselstrom in Gleichstrom umwandeln, der vollständig in Batteriebänken gespeichert werden kann .

3. USV dynamisch cogenerator nach Anspruch 2, die durch den aus den Kondensatoren **(17)** kommenden und anschließend gleichgerichteten Strom charakterisiert ist und zur SPS-Einheit **(8)** getrieben wird, wo durch Modifizieren der Logiksteuerung eine Impedanz erreicht wird, die die Spannung verzögert Frequenzdiagramm, programmieren auf diese Weise die Strommengen, die in der Batteriebank gespeichert sind, die an das Schnittstellenmodul **(14)** weitergeleitet werden, um den Anlasser **(4)** rückzumelden.

4. USV dynamisch cogenerator nach Anspruch 3, **dadurch gekennzeichnet, dass** die Rückkopplung und die Anordnung der Kraftvektoren in den Spulenmagnetfeldern **(5)** dem Rotor **(9)** Rotationskontinuität verleihen, indem die Einspeisung der Netzspannung unterbrochen wird. das wird ein autonomer elektrischer magnetischer Generator.

5. USV dynamisch cogenerator nach Anspruch 4, **dadurch gekennzeichnet, dass** die vom Generator erzeugte Leistung an den Wechselrichter **(13)** weitergeleitet wird, wo sie direkt als Wechselstrom verwendet wird, oder an eine Batteriebank zur Speicherung weitergeleitet wird.

6. USV dynamisch cogenerator nach Anspruch 5, **gekennzeichnet durch** die SPS-Einheit **(8),** ist so geplant, dass die elektrischen Impulsfängerspulen **(15)** die Rotationsfrequenz ändern und die erforderliche Stromerzeugung erhöhen oder verringern.

7. USV dynamisch cogenerator Dynamische nach Anspruch 6, **dadurch gekennzeichnet, dass** die SPS-Einheit **(8)** zum Schalten und Addieren der in Batterien gespeicherten Leistung mit dem im Wechselrichter **(13)** verfügbaren Strom programmiert ist.

## Revendications

1. L'UPS de cogénération dynamique comprend :
a) un châssis **(1)** où est monté l'équipement complet, avec une structure en tiges de fer et d'aluminium **(2)** et une bague de confinement **(3)** où sont montés les roulements, l'arbre **(16),** le démarreur **(4)**
b) un stator **(7)** avec des bobines **(5)** de cuivre émaillé, des collecteurs d'énergie électrique ; les noyaux des bobines **(6)** composés de résine, de styrène, de cobalt, de ferrite, de graphite ; condensateurs et supercondensateurs **(17)**
c) Rotor **(9)** en matériau non magnétique avec deux canaux concentriques **(10)** où vont les aimants en néodyme **(11)** et un orifice de disque central pour les brides **(12)** en aluminium de haute pureté ;
d) Un module logique programmable PLC **(8)** qui a intégré : une commande, une unité de commande et un afficheur de rétroéclairage ; source d'alimentation électrique ; interface pour modules d'extension ; interface pour module de programmation (carte) et câble pour PC ; minuterie (timer) ; marquages (commandes) numériques et analogiques ; lecteur et contrôleur d'entrée et de sortie de signaux ;
e) Ponts redresseurs AC-DC (Courant alternatif - Courant Continu) Full-Wave ;
f) Des brides **(12)** qui sont des disques en aluminium avec un trou central qui supporte le disque magnétique **(9)** à l'arbre **(16),** couplés par des vis de fixation ;
g) Condensateurs **(17)** avec une capacité de 15uF, + -5%, et des supercondensateurs de 150uF de + -5%, 200V ;
h) Aimants en néodyme **(11);**
i) Onduleur électronique triphasé **(13)** qui reçoit le courant continu de 0V à 30V et le convertit en courant triphasé ;
j) Module d'interface **(14)** constitué d'un ensemble de transistors de type MOSFET ((metal-oxide-semiconductor field-effect transistor), et de semi-conducteurs à couplage de courant commandés en puissance.
k) Deux bobines de captage **(15)** avec noyau d'air pour le positionnement de la plaque (disque); et
l) Banque de batterie.

2. UPS dynamique à cogénération de la revendication 1, **CARACTÉRISÉ PARCE QUE** le démarreur **(4)** est alimenté en courant électrique par un réseau externe en faisant tourner le rotor à disque magnétique **(9)** ; Lorsque les aimants au néodyme **(11)** passent sur les bobines du stator (5), ils produisent une impulsion électrique qui passe à travers les condensateurs **(17)** et est acheminée vers les redresseurs en pont qui convertissent le courant alternatif en courant continu, qui peuvent être entièrement stockés dans des groupes de batteries.

3. Onduleur Co générateur dynamique selon la revendication 2, **CARACTÉRISÉ PARCE QUE** le courant sortant des condensateurs **(17)** et qui est ensuite redressé est acheminé vers l'unité API **(8)** où, en modifiant le contrôleur logique, on obtient une impédance qui retarde le diagramme de fréquence, en programmant ainsi les quantités de courant stockées dans le groupe de batteries, qui sont transmises au module d'interface **(14)** afin de renvoyer en retour le moteur de démarrage **(4).**

4. UPS dynamique Co générateur selon la revendication 3, **CARACTÉRISÉ PARCE QUE** il fournit la rétroaction et en disposant les vecteurs de force dans les champs magnétiques des bobines (5), assure la continuité de rotation du rotor **(9),** en déconnectant l'alimentation du réseau l'électricité devenant un générateur magnétique électrique autonome.

5. UPS dynamique Co générateur selon la revendication 4, **CARACTÉRISÉ PARCE QUE** le courant produit par le générateur est acheminé vers l'inverseur **(13)** où il est directement utilisé comme courant alternatif ou conduit vers un groupe de batteries à stocker.

6. UPS dynamique Co générateur selon la revendication 5, **CARACTÉRISÉ PARCE QUE** l'PLC **(8),** est programmée de manière que les bobines collectrices d'impulsions électriques **(15)** changent la fréquence de rotation et augmentent ou diminuent la production d'énergie requise.

7. UPS dynamique Co générateur selon la revendication 6, **CARACTÉRISÉ PARCE QUE** l'unité PLC **(8)** est programmée pour commuter et ajouter l'énergie stockée dans des batteries avec le courant disponible dans l'onduleur **(13).**
